**Europäisches Patentamt**

(19) **European Patent Office**

**Office européen des brevets**

(11) Numéro de publication: **0 200 613**
**B1**

(12) **FASCICULE DE BREVET EUROPEEN**

(45) Date de publication du fascicule du brevet:
03.10.90

(51) Int. Cl.⁵: **G02B 6/24**, G02B 6/34

(21) Numéro de dépôt: **86400749.7**

(22) Date de dépôt: **08.04.86**

(54) **Dispositif multiplexeur-démultiplexeur optique et son procédé de fabrication.**

(30) Priorité: **12.04.85 FR 8505507**

(43) Date de publication de la demande:
**10.12.86 Bulletin 86/45**

(45) Mention de la délivrance du brevet:
**03.10.90 Bulletin 90/40**

(84) Etats contractants désignés:
**DE GB NL**

(56) Documents cités:
**EP-A- 0 112 455**
**GB-A- 2 069 173**
**JP-A- 565 506**
**US-A- 4 228 349**
**US-A- 4 432 601**

**ELECTRONICS INTERNATIONAL,**
**vol. 55, no. 20, 6 octobre 1982, page 48, New York, US; N.**
**ALSTER: "Injection molding slated for multiplexer"**

(73) Titulaire: **SAT Société Anonyme de Télécommunications, 41, rue Cantagrel, F-75631 Paris Cedex 13(FR)**

(72) Inventeur: **Amadieu, Philippe Jean-Louis, 41 rue Cantagrel, F-75631 Paris Cedex 13(FR)**
Inventeur: **Guinet, Michel Claude, 41 rue Cantagrel, F-75631 Paris Cedex 13(FR)**
Inventeur: **Lonnoy, Charles Jacques Jean, 41 rue Cantagrel, F-75631 Paris Cedex 13(FR)**

(74) Mandataire: **Martinet & Lapoux, 62, rue des Mathurins, F-75008 Paris(FR)**

## Description

La présente invention concerne un dispositif multiplexeur-démultiplexeur optique, appelé "muldex", permettant un mélange ou une séparation de signaux optiques transportés par des fibres optiques, c'est-à-dire un multiplexage ou un démultiplexage de deux longueurs d'onde.

Lorsque le dispositif fonctionne en multiplexeur, il mélange sur une même fibre optique au moins deux signaux optiques ayant respectivement des longueurs d'onde différentes, propagés par deux fibres optiques. Un multiplexeur possède ainsi deux entrées, et une sortie. Réciproquement, lorsque le dispositif fonctionne en démultiplexeur, il sépare deux signaux optiques propagés par une même fibre optique, et ayant deux longueurs d'onde différentes, chaque signal étant affecté à l'une de deux fibres en sortie. Le démultiplexeur possède ainsi une entrée et deux sorties.

Un tel dispositif multiplexeur-démultiplexeur optique est utilisé en particulier pour de la vidéocommunication et de la télédistribution par réseaux de télécommunication câblés, mettant en oeuvre des liaisons par fibres optiques dans lesquelles des longueurs d'onde de signaux sont respectivement assignées à des abonnés ou à des groupes d'abonnés.

Plus précisément, l'invention a trait à un multiplexeur-démultiplexeur optique tel que défini dans le préambule de la revendication 1. Un tel dispositif est décrit dans la demande de brevet britannique GB-A-2 069 173.

Pour réaliser ce dispositif, appelé également coupleur optique de fibres, on procède aux opérations suivantes.

Un tronçon d'une fibre optique destiné à constituer les première et troisième fibres optiques est dénudé mécaniquement et chimiquement. Le tronçon dénudé est enrobé complètement dans de la résine époxyde par moulage. La pièce issue du moulage est coupée à 45° par rapport à l'axe de la fibre optique et au niveau du tronçon dénudé. Après polissage et nettoyage, au moins la face extrême frontale biseautée à 45° de l'une des première et troisième fibres ainsi obtenues par découpe est revêtue de plusieurs couches dichroïques et d'un matériau diélectrique pour former le filtre dichroïque.

Puis, les deux faces sciées de la pièce moulée sont réunies afin d'aligner les première et troisième fibres optiques au moyen d'une table de positionnement micrométrique et d'un dispositif de mesure de puissance optique classique. Les faces sciées de la pièce sont accolées par de la résine époxyde durcie par traitement thermique. Enfin, la pièce ainsi assemblée est percée perpendiculairement aux extrémités des première et troisième fibres optiques afin d'enrober par de la résine dans le trou obtenu une extrémité dénudée et convenablement préparée de la seconde fibre optique.

Un tel dispositif est réalisable en usine, mais est difficilement réalisable en chantier, en raison des moyens complexes, fragiles et encombrants mis en oeuvre. En particulier, le sciage et le polissage sont très délicats, et l'assemblage des deux parties de pièce de moulage est très rigoureux.

Par ailleurs, lorsqu'un tel dispositif est destiné à coupler trois extrémités de fibres optiques contenues dans des câbles, il est nécessaire de raccorder les trois accès du dispositif aux extrémités des fibres optiques de câble par des connecteurs fibre-à-fibre, ce qui augmente le coût du couplage optique et la durée des opérations de couplage. En effet, dans ce dispositif, les extrémités des première et troisième fibres optiques à coupler pour former une voie de transmission sont issues d'une même fibre optique coupée.

La présente invention vise à remédier aux inconvénients selon la technique antérieure évoquée ci-dessus, et en particulier à obtenir un dispositif multiplexeur-démultiplexeur optique ne nécessitant aucun sciage et polissage des extrémités des fibres optiques, c'est-à-dire permettant un couplage direct des extrémités des fibres à coupler et également un positionnement précis des extrémités des fibres sans recourir à un assemblage de deux parties d'une pièce formant support des fibres. En outre, le dispositif selon l'invention est aisément réalisable en chantier.

A ces fins, un dispositif multiplexeur-démultiplexeur est tel que défini dans la revendication 1.

Selon l'invention, des filtres dichroïques sont réalisés en usine sous la forme de lames dichroïques, ce qui permet de choisir en chantier un filtre ayant des pouvoirs de réflexion et de transmission adaptées aux longueurs d'onde des signaux optiques transmis par les fibres optiques à coupler.

Les différentes pièces constituant le dispositif et, en particulier, le support rainuré sont également réalisés en usine. Le support offre trois rainures, de préférence en vé, pour recevoir en chantier les extrémités dénudées des fibres optiques sans recourir à de quelconques moyens de mesure de positionnement de l'une des fibres par rapport aux autres. Les extrémités des fibres sont immobilisées simplement dans le support par de la colle, et poussées dans le fond des rainures, le cas échéant, par des lamelles de verre recouvrant partiellement la face rainurée du support de part et d'autre de la fente. En outre, la lame dichroïque est amovible du support et immobilisée dans la fente par des moyens mécaniques, ce qui permet de retirer la lame dichroïque en vue de la remplacer par une autre, adaptée à d'autres longueurs d'onde, lorsque les longueurs d'onde des signaux optiques propagés par les fibres sont modifiées pour des raisons d'exploitation.

Selon d'autres caractéristiques de l'invention, la lame dichroïque est composée d'un substrat ayant un indice de réfraction élevé, supérieur à celui de la colle, lequel est sensiblement égal à celui du coeur des fibres optiques, et est typiquement égal ou supérieur à 2. Le matériau du substrat à indice de réfraction élevé confère une diminution de la séparation optique des signaux optiques, et notamment une diminution de perte d'insertion sur la voie de transmission constituée par la troisième fibre optique essentiellement. De préférence, le substrat est en silicium ou en phosphure d'indium.

L'invention concerne également un procédé de fabrication du dispositif multiplexeur-démultiplexeur tel que défini dans les revendications 14, 15 et 16.

D'autres avantages et caractéristiques de l'invention apparaîtront plus clairement à la lecture de la description suivante de plusieurs réalisations préférées de l'invention en référence aux dessins annexés correspondants dans lesquels:

- la Fig.1 est une vue de dessous d'un dispositif de multiplexage-démultiplexage selon l'invention ;
- la Fig.2 est une vue en coupe prise le long de la ligne II-II de la Fig.1, montrant notamment des moyens pour immobiliser une lame dichroïque dans un support de fibres ;
- la Fig.3 est une vue en coupe prise le long de la ligne brisée III-III de la Fig.1, montrant le positionnement transversal d'une fibre dans le dispositif ; et
- la Fig.4 est une vue de dessus du dispositif, avec une partie arrachée d'un capot, pour montrer le positionnement de deux lamelles de verre recouvrant des extrémités de coeur de fibre sur un support du dispositif.

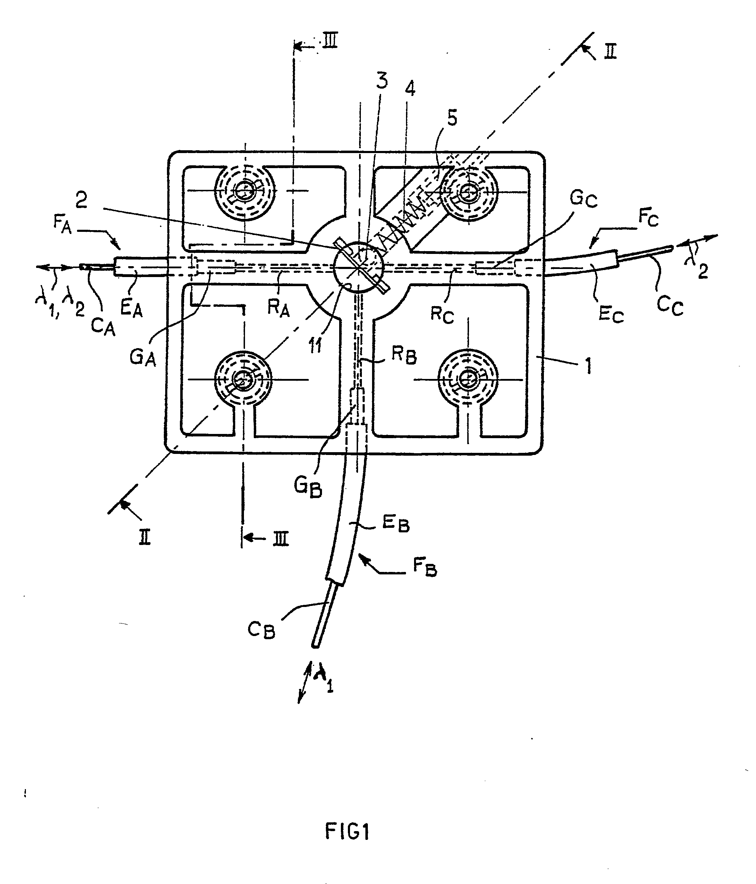

En se référant à la Fig.1, un dispositif multiplexeur-démultiplexeur optique selon l'invention comprend essentiellement un support monobloc rectangulaire 1 ayant une faible épaisseur. Le support est de préférence réalisé en matière thermoplastique ou thermodurcissable, ou en céramique, ou en un alliage léger à base d'aluminium par moulage et/ou usinage.

Trois rainures rectilignes $R_A$, $R_B$ et $R_C$ sont ménagées dans une grande face de dessus 10 du support 1 et sont perpendiculaires à trois côtés respectifs du support. Les trois rainures ont des longueurs égales et des sections transversales identiques, par exemple en vé avec angle au sommet de 60° environ. Les rainures sont coplanaires et sont situées l'une par rapport aux autres pour former sensiblement un té sur la face 10 ; les première et troisième rainures $R_A$ et $R_C$ constituent deux ailes du té et la seconde rainure $R_B$ constitue une jambe du té. Le sommet du té est situé sur l'axe d'un lamage 11 ménagé dans une grande face de dessous du support. Ainsi, la première rainure $R_A$ et la troisième rainure $R_C$ sont perpendiculaires à la seconde rainure $R_B$. La rainure $R_C$ est parallèle à la rainure $R_A$, mais est décalée par rapport à celle-ci en direction opposée à la rainure $R_B$, d'une très faible distance d qui est précisée dans la suite.

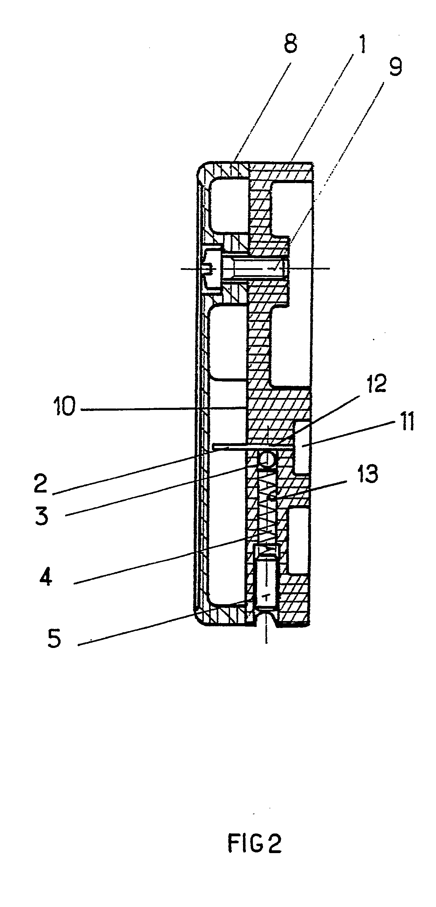

Comme montré aux Figs.1 et 2, une fente étroite 12 est prévue dans un plan axial au lamage 11, perpendiculaire à la grande face 10 du support, et à l'extérieur du secteur droit formé par les rainures $R_A$ et $R_B$. La fente est inclinée à 45° par rapport aux rainures. Dans la fente 12 est logée à glissement une lame dichroïque amovible 2 qui est ainsi disposée à 45° par rapport aux rainures et centrée exactement au croisement des deux rainures $R_A$ et $R_B$. La fente est plus large qu'un diamètre de lamage 10 et offre à une profondeur convenable, un fond supportant un chant longitudinal de la lame amovible 2 pour positionner le centre de la lame en regard des rainures. La lame 2 est immobilisée dans la fente 12 au moyen d'une bille 3 poussée par un ressort hélicoïdal 4 contre une face de la lame. Comme montré à la Fig.2, la bille 3 et le ressort 4 sont logés dans un conduit cylindrique 13 pratiqué sensiblement perpendiculairement et centralement à la fente 12 dans le support 1. Une vis sans tête 5 vissée dans le conduit 13 permet de régler la pression exercée par le ressort 4 sur la lame 2 à travers la bille 3, et ainsi d'immobiliser la lame 2 dans la fente 12. Un dévissage de la vis 5 permet de retirer la lame amovible 2 en vue de la remplacer par une autre lame dichroïque lorsque, par exemple, des longueurs d'onde des signaux optiques propagés par les fibres optiques à coupler sont modifiées.

Les rainures $R_A$, $R_B$ et $R_C$ sont destinées à recevoir des extrémités de première, seconde et troisième fibres optiques $F_A$, $F_B$ et $F_C$ respectivement. Chaque fibre optique $F_A$, $F_B$, $F_C$ est composée d'une manière connue, d'un coeur $C_A$, $C_B$, $C_C$ entouré concentriquement d'une gaine (en anglais :"coating" ou "cladding") $G_A$, $G_B$, $G_C$ et d'une enveloppe externe de protection $E_A$, $E_B$, $E_C$, généralement en élastomère, entourant concentriquement la gaine. Chacune des rainures $R_A$, $R_B$ et $R_C$ présente une section transversale diminuant par tronçons en direction de la fente 12, et comporte à partir du côté extérieur respectif du support 1, un premier tronçon à section large recevant une extrémité de l'enveloppe de protection $E_A$, $E_B$, $E_C$ de la fibre optique respective $F_A$, $F_B$, $F_C$, un second tronçon à section intermédiaire recevant une extrémité de la gaine $G_A$, $G_B$, $G_C$ de la fibre et un troisième tronçon à section faible recevant une extrémité du coeur $C_A$, $C_B$, $C_C$ de la fibre respective dégainée et débouchant dans la fente 12.

Après des opérations de dégainage connues et avant d'être logée dans la rainure correspondante $R_A$, $R_B$, $R_C$, l'extrémité du coeur de la fibre $F_A$, $F_B$, $F_C$ est coupée par clivage, c'est-à-dire exactement perpendiculairement à l'axe et la fibre afin d'obtenir une face extrême parfaitement plane exempte de défaut. La coupe par clivage peut être effectuée au moyen d'une pince à couper telle que décrite dans la demande de brevet français FR-A-2 561 223.

La lame dichroïque 2 est sensiblement une lame à faces parallèles, non pas réalisée dans du verre comme pour des filtres dichroïques connus, mais dans un substrat ayant un indice de réfraction élevé. Ceci permet de réduire la divergence de faisceaux lumineux reçus par la lame, comme cela apparaitra dans la suite. Par exemple, la lame 2 comprend un substrat en silicium (Si) présentant une épaisseur d'environ 100 μm, ou en phosphure d'indium (InP). Sur une face arrière de la lame 2, en vis à vis de l'extrémité de la fibre $F_C$, est déposée une couche antireflet. Sur une face avant du substrat destinée à être en vis à vis des extrémités des rainures $R_A$ et $R_B$, sont déposées, comme pour des filtres dichroïques connus, par exemple par évaporation, des couches métallisées permettant une réflexion d'ondes $\lambda_1$ dans une certaine bande spectrale et une transmission d'onde $\lambda_2$ dans une autre bande spectrale. Les matériaux d'évaporation habituellement utilisés sont pris dans le groupe $SiO_2$, $TiO_2$, ZnS, Cryolithe, ZnSe et $ThF_4$. Il est à noter que les filtres dichroïques connus nécessitent un grand nombre de couches, plus de 50 bien souvent, qui rendent délicate l'optimisation de la transmission avec des longueurs d'onde de 1,2 à 1,4 μm ainsi que la réalisation du filtre en ambiance industrielle.

Le substrat en matériau à indice de réfraction élevé est absorbant pour une longueur d'onde $\lambda_1$ qui est à réfléchir et est propagée de la fibre $F_A$ vers la fibre $F_B$, ou de la fibre $F_B$ vers la fibre $F_A$, et est transparent pour une longueur d'onde $\lambda_2$ à transmettre de la fibre $F_C$ vers la fibre $F_A$, ou de la fibre $F_A$ vers la fibre $F_C$. Par exemple le substrat est absorbant pour des longueurs d'onde de 0,8 à 0,9 μm et transparent pour des longueurs d'onde de 1,2 à 1,4 μm. Ainsi, avec du silicium ayant 100 μm d'épaisseur et une absorption supérieure à 13 dB pour la longueur d'onde $\lambda_1$, le coefficient de réflexion requis pour le filtre n'est plus que de 0,98, au lieu de 0,999 selon la technique antérieure, ce qui rend le filtre aisément réalisable avec un nombre très réduit de couches dichroïques, par exemple inférieur à 30. Une telle lame dichroïque 2 selon l'invention a un taux de réjection réduit à 17 dB au lieu de 30 dB pour des filtres dichroïques selon la technique antérieure.

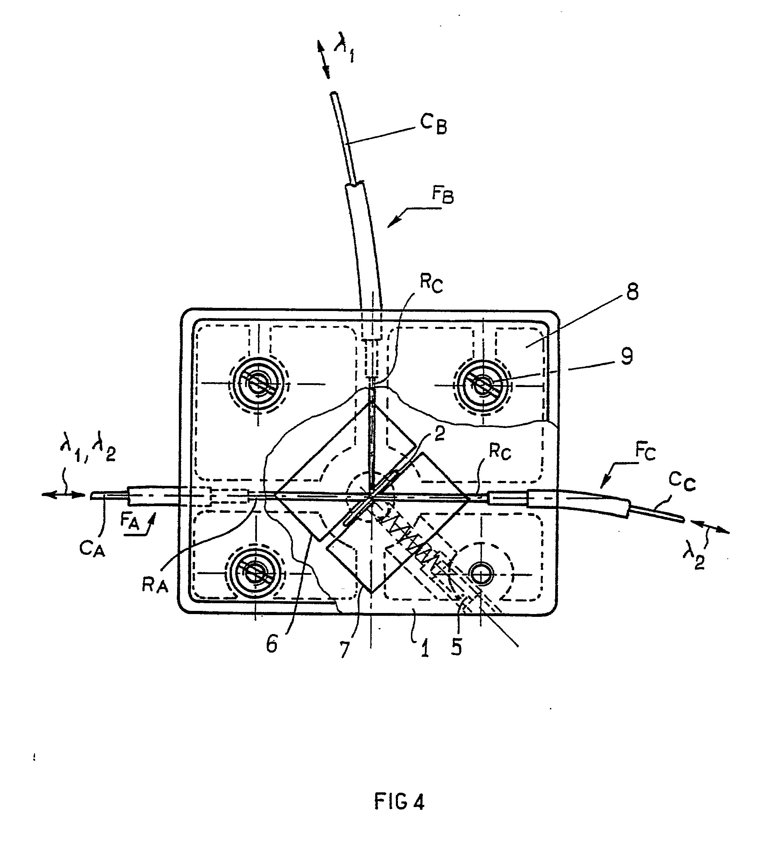

Les fibres dénudées $F_A$, $F_B$ et $F_C$ sont logées au fond des rainures respectives de la face 10 du support et ont des faces extrêmes positionnées en butée contre la lame 2. Un fluide ayant un indice de réfraction convenable est déposé au fond de chaque rainure ainsi que sur la lame dichroïque 2. Les extrémités des coeurs $C_A$, $C_B$ et $C_C$ des fibres $F_A$, $F_B$ et $F_C$, sont enfoncées et immobilisées dans les troisièmes tronçons des rainures respectives $R_A$, $R_B$ et $R_C$ au moyen de deux lamelles de verre 6 et 7 recouvrant partiellement la face de dessus 10 du support 1. Comme montré à la Fig.4, l'une, 6, des lamelles presse les coeurs des fibres $F_A$ et $F_B$ situés devant la face avant de la lame dichroïque 2, et l'autre lamelle 7 presse le coeur de la fibre $F_C$ situé devant la face arrière de la lame dichroïque 2. Comme montré aux Figs.2, 3 et 4, un capot 8 est ensuite appliqué sur la face de dessus 10 du support 1. Le capot 8 est fixé au support 1 par quatre vis 9 réparties à quatre coins du support 1 pour assurer la fermeture et l'étanchéité du dispositif. Le support 1 et le capot 8 sont usinés ou, de préférence, moulés afin de réduire leur coût de fabrication.

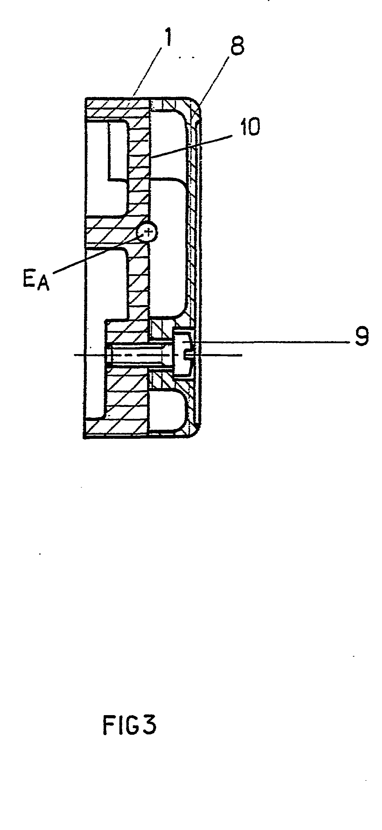

Le support 1 et le capot 8 sont pourvus d'évidements, comme montré en coupe aux Figs.2 et 3. Les évidements sont obtenus de préférence par moulage ce qui économise la quantité de matériau utilisée pour obtenir le support et le capot. En outre, le capot 8 repose sur la face 10 du support 1 et est évidé au voisinage des lamelles 6 et 7.

Comme déjà dit, les extrémités des fibres sont noyées dans un fluide d'adaptation d'indice qui est de la colle polymérisable déposée essentiellement au fond des troisièmes tronçons des rainures $R_A$, $R_B$ et $R_C$ contenant les extrémités des coeurs $C_A$, $C_B$ et $C_C$, et partiellement sur la lame 2. La colle a un indice de réfraction n de préférence sensiblement égal à celui du coeur des fibres. Après polymérisation sous l'action d'un rayonnement ultraviolet, la colle immobilise les fibres $F_A$, $F_B$ et $F_C$ dans les rainures et les lamelles de verre 6 et 7 sur le support 1.

En outre, lorsque l'indice de réfraction n de la colle est égal à l'indice de réfraction des fibres, aucune perte de Fresnel n'apparaît au niveau de dioptres formées par les extrémités coupées des coeurs de fibre, et une divergence de faisceaux lumineux convoyés par les fibres est réduite. Un choix approprié d'un substrat d'indice de réfraction $n_s$ et d'épaisseur e pour réaliser la lame dichroïque 2 diminue la séparation optique entre la fibre $F_A$ convoyant deux longueurs d'onde $\lambda_1$ et $\lambda_2$ et la fibre C convoyant la longueur d'onde $\lambda_2$. Tout se passe comme si l'épaisseur e du substrat est égale à $e.n/n_s$. Comme l'indice $n_s$ du substrat est supérieur à n et est de préférence égal ou supérieur à 2, la séparation optique est diminuée et la perte d'insertion sur la voie de transmission constituée par les fibres $F_A$ et $F_C$ est améliorée.

Lorsque les fibres $F_B$ et $F_C$ transportent des longueurs d'onde $\lambda_1 = 0,8$ μm et $\lambda_2 = 1,3$ μm, un substrat en silicium ayant une épaisseur de 100 μm garantit 30 dB de diaphonie dans la voie de transmission $F_A$ ou $F_C$, grâce au pouvoir d'absorption élevé du substrat de la lame 2 pour la longueur d'onde $\lambda_1$. La valeur de 30 dB ne peut pas être obtenue selon la technique antérieure avec un seul filtre dichroïque, en immersion dans la colle sous l'incidence de 45°.

De même dans la voie de réflexion $F_A$ ou $F_B$, la diaphonie est inférieure à 30 dB grâce au pouvoir de transmission élevé du substrat de la lame 2 pour la longueur d'onde $\lambda_1$. Les performances de couplage, c'est-à-dire les pertes dans la voie de réflexion à longueur d'onde $\lambda_1$ et la voie de transmission à longueur d'onde $\lambda_2$ sont résumées dans le tableau suivant :

| Dimensions de fibre | : | $\lambda_1 = 0,85$ μm | : | $\lambda_2 = 1,3$ μm |
|---|---|---|---|---|
| diamètre de coeur/diamètre de gaine : | | | . : | |
| | | | | |
| 50/125 μm | : | 1,2 dB | : | 1,7 dB |
| 85/125 μm | : | 0,7 dB | : | 1,2 dB |

Le dispositif selon l'invention présente de nombreux avantages et simplifications. Il ne nécessite pas, comme selon la technique antérieure, de polissage des extrémités de fibre ; une simple fracture par clivage suffit. La continuité optique est assurée, d'une part, au moyen de la colle, d'autre part, au moyen du substrat. La colle élimine les phénomènes de pollution, tels que poussières par exemple, et procure un bon confinement optique.

En effet, le dispositif de l'invention est un système optique en lumière confinée ; pour effectuer un multiplexage de deux signaux optiques transmis par les fibres $F_B$ et $F_C$ en un signal multiplex optique dans la fibre $F_A$, ou un démultiplexage d'un signal multiplex optique à deux longueurs d'onde transmis par la fibre $F_A$ en deux signaux optiques dans les fibres $F_B$ et $F_C$, le dispositif ne requiert aucune transformation des faisceaux sortant des extrémités des fibres, telle que collimation par l'intermédiaire d'éléments optiques, tels que des lentilles et particulièrement des lentilles Selfoc. La colle utilisée comme milieu intermédiaire entre les extrémités des fibres $F_A$, $F_B$ et $F_C$ et la lame dichroïque 2 ainsi que comme moyen pour immobiliser les fibres dans les rainures $R_A$, $R_B$ et $R_C$ est une colle connue qui polymérise sous l'action de rayonnement ultraviolet. L'une des colles commercialisées sous les noms suivants : EPOTEK, LOCTITE et VITRALIT peut être utilisée.

En outre, le dispositif formé par le support 1 et le capot 8 constitue un ensemble unitaire compact qui préserve le couplage optique contre des agressions de l'environnement du dispositif telles que chocs, vibrations, ou analogues. Une fabrication en série des éléments constituant le dispositif peut être réalisée à moindre coût.

La seule précaution particulière pour réaliser le support 1 est de prévoir le décalage précité d de la rainure $R_C$ en correspondance avec la longueur d'onde transmise $\lambda_2$ pour mouler ou usiner la rainure $R_C$ à bon escient. L'homme du métier peut aisément calculer le décalage d en fonction de caractéristiques de la lame dichroïque 2 selon l'invention et, en particulier, en fonction de l'épaisseur e de la lame et de l'indice $n_S$ du substrat grâce aux relations classiques de réfraction. Par exemple, si r désigne un angle de réfraction pour un angle d'incidence i, égal à 45° selon la réalisation illustrée, le décalage est déduit de la formule suivante :

$$d = e(\sin(i-r))/\cos r = f(n_S, n, e, i)$$

Par ailleurs, le dispositif peut être utilisé pour des transmissions bidirectionnelles, chacune des longueurs d'onde $\lambda_1$ et $\lambda_2$ étant transmise suivant l'une ou l'autre direction et indépendamment l'une de l'autre.

**Revendications**

1. Dispositif multiplexeur-démultiplexeur optique comprenant une extrémité d'une première fibre optique ($F_A$) formant l'une des ailes d'un té majuscule, une extrémité d'une seconde fibre optique ($F_B$) formant une jambe du té, une extrémité d'une troisième fibre optique ($F_C$) formant une autre aile du té, et un filtre dichroïque (2) disposé transversalement au sommet du té pour réfléchir un signal optique à une première longueur d'onde ($\lambda_1$) propagé dans les première et seconde fibres optiques ($F_A$, $F_B$) et pour transmettre un signal optique à une seconde longueur d'onde ($\lambda_2$) propagé dans les première et troisième fibres optiques ($F_A$, $F_C$), caractérisé en ce qu'il comprend un support monobloc (1) ayant une face (10) comportant trois rainures ($R_A$, $R_B$, $R_C$) disposées selon ledit té majuscule pour recevoir coplanairement les extrémités des trois fibres optiques ($F_A$, $F_B$, $F_C$) respectivement, et une fente (12) perpendiculaire à la face de support (10) et inclinée sensiblement à 45° par rapport aux trois rainures ($R_A$, $R_B$, $R_C$) pour loger le filtre dichroïque (2) au croisement desdites rainures, en ce que le filtre dichroïque est une lame dichroïque (2) composée d'un substrat à faces sensiblement parallèles, l'une des faces du substrat orientée en regard des extrémités des premières et seconde fibres optiques ($F_A$, $F_B$) supportant des couches dichroïques pour réfléchir et transmettre lesdits signaux auxdites première et seconde longueurs d'onde ($\lambda_1$, $\lambda_2$) res-

pectivement, et en ce que la rainure (R$_C$) contenant l'extrémité de la troisième fibre (F$_C$) est décalée parallèlement à la rainure (R$_A$) contenant l'extrémité de la première fibre (F$_A$), en direction opposée à la rainure (R$_B$) contenant l'extrémité de la seconde fibre (F$_B$), d'une distance (d) fonction notamment de l'épaisseur (e) et de l'indice de réfraction (n$_S$) du substrat de ladite lame dichroïque (2).

2. Dispositif conforme à la revendication 1, caractérisé en ce que le substrat a un indice de réfraction (n$_S$) égal ou supérieur à 2 et est de préférence en silicium ou en phosphure d'indium.

3. Dispositif conforme à la revendications 1 ou 2, caractérisé en ce qu'il comprend de la colle pour fixer lesdites fibres (F$_A$, F$_B$, F$_C$) dans lesdites rainures (R$_A$, R$_B$, R$_C$) respectivement, ladite colle étant de préférence interposée entre des faces extrêmes des fibres et ladite lame dichroïque (2).

4. Dispositif conforme à la revendication 3, caractérisé en ce que ladite colle a un indice de réfraction (n) sensiblement égal à celui de cœur (C$_A$, C$_B$, C$_D$) des fibres (F$_A$, F$_B$, F$_C$).

5. Dispositif conforme à la revendication 4, caractérisé en ce que l'indice de réfraction (n) de la colle est inférieur à celui (n$_S$) du substrat de ladite lame (2).

6. Dispositif conforme à l'une quelconque des revendications 1 à 5, caractérisé en ce que lesdites rainures (R$_A$, R$_B$, R$_C$) ont des sections transversales en vé.

7. Dispositif conforme à l'une quelconque des revendications 1 à 6, caractérisé en ce qu'il comprend des moyens mécaniques (6, 7), telles que des lamelles en verre, pour immobiliser et presser les extrémités des fibres (F$_A$, F$_B$, F$_C$) noyées dans de la colle dans lesdites rainures, de part et d'autre de ladite lame dichroïque (2).

8. Dispositif conforme à l'une quelconque des revendications 1 à 7, caractérisé en ce que ledit support monobloc (1) est réalisé par moulage et/ou usinage.

9. Dispositif conforme à l'une quelconque des revendications 1 à 8, caractérisé en ce que ledit support (1) est en matériau thermoplastique ou thermodurcissable, ou en céramique, ou en un alliage à base d'aluminium.

10. Dispositif conforme à l'une quelconque des revendications 1 à 9, caractérisé en ce que la lame dichroïque (2) est amovible du support (1).

11. Dispositif conforme à l'une quelconque des revendications 1 à 10, caractérisé en ce qu'il comprend des moyens (3, 4, 5) logeables dans le support (1) pour immobiliser la lame dichroïque (2) dans la fente (12).

12. Dispositif conforme à la revendication 11, caractérisé en ce que les moyens pour immobiliser la lame dichroïque comprennent dans un conduit (13) du support (1) sensiblement perpendiculaire à la fente (12), un ressort (4) interposé entre une bille (3) et une vis (5), la bille (3) pressant la lame (2) dans la fente (12) sous l'action du ressort (4).

13. Dispositif conforme à l'une quelconque des revendications 1 à 12, caractérisé en ce que chacune des rainures (R$_A$, R$_B$, R$_C$) comporte trois tronçons alignés pour recevoir respectivement des extrémités d'une enveloppe de protection (E$_A$, E$_B$, E$_C$), d'une gaine (G$_A$, G$_B$, G$_C$) et d'un cœur (C$_A$, C$_B$, C$_C$) de la fibre optique respective (F$_A$, F$_B$, F$_C$).

14. Procédé de fabrication d'un dispositif multiplexeur-démultiplexeur optique conforme à l'une quelconque des revendications 1 à 13, caractérisé en ce que les extrémités des fibres optiques (F$_A$, F$_B$, F$_C$) sont dénudées, au moins au voisinage de la fente (12) dudit support (1), sont coupées, et sont logées au voisinage de la lame dichroïque (2) respectivement dans les rainures (R$_A$, R$_B$, R$_C$) après avoir été immergées dans un fluide d'adaptation d'indice, et sont immobilisées dans le support par des moyens presseurs (6, 7) disposés sur la face (10) du support et de part et d'autre de ladite lame (2), lesdits moyens presseurs étant eux-mêmes immobilisés contre la face (10) du support (1).

15. Procédé conforme à la revendication 14, caractérisé en ce que l'extrémité de chaque fibre (F$_A$, F$_B$, F$_C$) est coupée par clivage perpendiculairement à l'axe longitudinal de la fibre.

16. Procédé conforme à la revendication 14 ou 15, caractérisé en ce que le fluide d'adaptation d'indice est de la colle.

## Claims

1. Optical multiplexer-demultiplexer device comprising an end of a first optical fiber (F$_A$) forming one of arms of a T pattern, an end of a second optical fiber (F$_B$) forming a stem of the T pattern, an end of a third optical fiber (F$_C$) forming another arm of the T pattern, and a dichroic filter (2) disposed across top of the T pattern for reflecting an optical signal with a first wavelength ($\lambda_1$) propagated in the first and second optical fibers (F$_A$, F$_B$) and for transmitting an optical signal with a second wavelength ($\lambda_2$) propagated in the first and third optical fibers (F$_A$, F$_B$), characterized in that it comprises a one-piece support (1) having a face (10) containing three grooves (R$_A$, R$_B$, R$_C$) arranged according to said T pattern for accommodating coplanarly the ends of the three fibers (F$_A$, F$_B$, F$_C$) respectively, and a slit (12) perpendicular to the support face (10) and tilted at substantially 45° with respect to the three grooves (R$_A$, R$_B$, R$_C$) to accommodate the dichroic filter (2) at the intersection of said grooves, in that the dichroic filter is a dichroic plate (2) including a substrate having substantially parallel faces, one of the substrate faces facing ends of the first and second optical fibers ($F_A$, $F_B$), carrying dichroic layers to respectively reflect and transmit said signals with said first and second wavelengths ($\lambda_1$, $\lambda_2$), and in that the groove ($R_C$) containing the end of the third fiber ($F_C$) is offset parallel to the groove ($R_A$) containing the end of the first fiber ($F_A$) in the direction away from the groove ($R_B$) containing the end of the second fiber, a distance (d) depending in particular on the thickness (e) and the refraction index ($n_S$) of the substrate of said dichroic plate (2).

2. Device according to claim 1, characterized in that the substrate has a refractive index ($n_S$) equal to or more than 2 and preferably is made of silicon or of indiumphosphid.

3. Device according to claim 1 or 2, characterized in that it comprises an adhesive for holding said fibers ($F_A$, $F_B$, $F_C$) in said grooves ($R_A$, $R_B$, $R_C$) respectively, said adhesive being preferably interposed between fiber endfaces and said dichroic plate (2).

4. Device according to claim 3, characterized in that said adhesive has a refractive index (n) substantially equal to that of core ($C_A$, $C_B$, $C_C$) of the fibers ($F_A$, $F_B$, $F_C$).

5. Device according to claim 4, characterized in that the adhesive refractive index (n) is lower than that ($n_S$) of the substrate of said plate (2).

6. Device according to any one of claims 1 to 5, characterized in that said grooves ($R_A$, $R_B$, $R_C$) have V cross-sections.

7. Device according to any one of claims 1 to 6, characterized in that it comprises mechanical means (6, 7), such as glass laminae, for immobilizing and pressing the ends of the fiber ($F_A$, $F_B$, $F_C$) in adhesive immersed in said grooves on both sides of said dichroic plate (2).

8. Device according to any one of claims 1 to 7, characterized in that said one-piece support (1) is made by molding and/or machining.

9. Device to any one of claims 1 to 8, characterized in that said support (1) is made of a thermoplastic or thermosetting material, or of a ceramic, or of an aluminium-base alloy.

10. Device according to any one of claims 1 to 9, characterized in that the dichroic plate (2) is removable from the support (1).

11. Device according to any one of claims 1 to 9, characterized in that it comprises means (3, 4, 5) lodgeable within the support (1) for immobilizing the dichroic plate (2) in the slit (12).

12. Device according to claim 11, characterized in that the dichroic plate immobilizing means comprise in a passage (13) of the support (1) substantially perpendicular to the slit (12), a spring (4) interposed between a ball (3) and a screw (5), the ball (3) pressing the plate (2) in the slit (12) under the action of the spring (4).

13. Device according to any one of claims 1 to 12, characterized in that each of the grooves ($G_A$, $G_B$, $G_C$) comprises three aligned portions for respectively receiving ends of a protective jacket ($E_A$, $E_B$, $E_C$), a cladding ($G_A$, $G_B$, $G_C$) and a core ($C_A$, $C_B$, $C_C$) of the respective optical fiber ($F_A$, $F_B$, $F_C$).

14. Method of fabricating an optical multiplexer-demultiplexer device according to any one of claims 1 to 13, characterized in that the ends of optical fibers ($F_A$, $F_B$, $F_C$) are stripped at least in the vicinity of the slit (12) in said support (1), are cut and are lodged near the dichroic plate (2) respectively in the grooves ($R_A$, $R_B$, $R_C$) after having been immersed in an index matching fluid, and are immobilizing in the support by pressing means (6, 7) disposed on the face (10) of the support to each side of said plate (2), said pressing means being themselves immobilized against the face (10) of the support (1).

15. Method according to claim 14, characterized in that the end of each fiber ($F_A$, $F_B$, $F_C$) is cut by cleaving perpendicularly to the longitudinal axis of the fiber.

16. Method according to claim 14 or 15, characterized in that the index matching fluid is adhesive.

**Patentansprüche**

1. Optischer Multiplexer/Demultiplexer mit einem Endstück einer ersten optischen Faser ($F_A$), das einen Schenkel eines großen T's bildet, mit einem Endstück einer zweiten optischen Faser ($F_B$), das den Fuß des T's bildet, mit einem Endstück einer dritten optischen Faser ($F_C$), das den anderen Schenkel des T's bildet, und mit einem Zweifarbenfilter (2), das quer zur Spitze des T's angeordnet ist, um ein optisches Signal einer ersten Wellenlänge ($\lambda_1$), das sich in der ersten und zweiten optischen Faser ($F_A$, $F_B$) ausbreitet, zu reflektieren und um ein optisches Signal einer zweiten Wellenlänge ($\lambda_2$), dass sich in der ersten und dritten optischen Faser ($F_A$, $F_C$) ausbreitet, durchzulassen, dadurch gekennzeichnet, daß er ein einstückiges Stützteil (1) mit einer Oberfläche (10), die mit drei Nuten ($R_A$, $R_B$, $R_C$) versehen ist, die entsprechend dem großen T angeordnet sind, um jeweils die Enden der drei optischen Fasern ($F_A$, $F_B$, $F_C$) in einer Ebene aufzunehmen, und einen Schlitz (12) senkrecht zur Oberfläche des Stützteiles (10) aufweist, der genau um 45° bezüglich der drei Nuten ($R_A$, $R_B$, $R_C$) geneigt ist, um das Zweifarbenfilter (2) in der Kreuzungsstelle der Nuten anzuordnen, und daß das Zweifarbenfilter (2) ein zweifarbiges Plättchen (2) ist, das aus einem Substrat mit genau parallelen Oberflächen gebildet ist, wobei eine der Oberflächen des Substrates den Enden der ersten und zweiten optischen Faser ($F_A$, $F_B$) gegenüberliegend

7

ausgerichtet ist und zweifarbige Schichten trägt, um die Signale mit der ersten und zweiten Wellenlänge ($\lambda$1, $\lambda$2) zu reflektieren bzw. durchzulassen, und daß die Nut ($R_C$), die das Endstück der dritten Faser ($F_C$) enthält, parallel zur Nut ($R_A$), die das Endstück der ersten Faser ($F_A$) enthält, in entgegengesetzter Richtung zur Nut ($R_B$), die das Endstück der zweiten Faser ($F_B$) enthält, um einen Abstand (d) versetzt ist, der insbesondere eine Funktion der Dicke (e) und des Brechungsindex ($n_S$) des Substrates des zweifarbigen Plättchens (2) ist.

2. Optischer Multiplexer/Demultiplexer nach Anspruch 1, dadurch gekennzeichnet, daß das Substrat einen Brechungsindex ($n_S$) gleich oder größer als 2 aufweist und bevorzugter Weise aus Silizium oder aus einer Indium-Phosphor-Verbindung besteht.

3. Optischer Multiplexer/Demultiplexer nach Anspruch 1 oder 2, dadurch gekennzeichnet, daß er einen Klebstoff enthält, um die Fasern ($F_A$, $F_B$, $F_B$) jeweils in den Nuten ($R_A$, $R_B$, $R_C$) zu befestigen, wobei dieser Klebstoff vorteilhafterweise zwischen den äußeren Oberflächen der Fasern und dem zweifarbigen Plättchen (2) angebracht ist.

4. Optischer Multiplexer/Demultiplexer nach Anspruch 3, dadurch gekennzeichnet, daß der Klebstoff einen Brechungsindex (n) aufweist, der genau gleich demjenigen der Kerne ($C_A$, $C_B$, $C_C$) der Fasern ($F_A$, $F_B$, $F_C$) ist.

5. Optischer Multiplexer/Demultiplexer nach Anspruch 4, dadurch gekennzeichnet, daß der Brechungsindex (n) des Klebstoffes geringer ist als derjenige ($n_S$) des Substrates des Plättchens (2).

6. Optischer Multiplexer/Demultiplexer nach einem der Ansprüche 1 bis 5, dadurch gekennzeichnet, daß die Nuten ($R_A$, $R_B$, $R_C$) einen V-förmigen Querschnitt aufweisen.

7. Optischer Multiplexer/Demultiplexer nach einem der Ansprüche 1 bis 6, dadurch gekennzeichnet, daß er mechanische Einrichtungen (6, 7), wie Glaslamellen, aufweist, um die Enden der Fasern ($F_A$, $F_B$, $F_C$), die in den Klebstoff in den Nuten eingetaucht sind, beiderseits des zweifarbigen Plättchens (2) zu halten und festzuklemmen.

8. Optischer Multiplexer/Demultiplexer nach einem der Ansprüche 1 bis 7, dadurch gekennzeichnet, daß das einstückige Stützteil (1) durch Gießen und/oder Bearbeitung hergestellt ist.

9. Optischer Multiplexer/Demultiplexer nach einem der Ansprüche 1 bis 8, dadurch gekennzeichnet, daß das Stützteil (1) aus thermoplastischem oder thermisch härtbarem Material oder aus Keramik oder aus einer Aluminiumlegierung besteht.

10. Optischer Multiplexer/Demultiplexer nach einem der Ansprüche 1 bis 9, dadurch gekennzeichnet, daß das zweifarbige Plättchen (2) auswechselbar am Stützteil (1) angeordnet ist.

11. Optischer Multiplexer/Demultiplexer nach einem der Ansprüche 1 bis 10, dadurch gekennzeichnet, daß er Vorrichtungen (3, 4, 5), die in das Stützteil (1) einsetzbar sind, aufweist, um das zweifarbige Plättchen (2) im Schlitz (12) festzuhalten.

12. Optischer Multiplexer/Demultiplexer nach Anspruch 11, dadurch gekennzeichnet, daß die Vorrichtungen zum Festhalten des zweifarbigen Plättchens aus einer zum Schlitz (12) genau senkrecht verlaufenden Röhre (13) im Stützteil (1), einer zwischen einer Kugel (3) und einer Schraube (5) angeordneten Feder (4) bestehen, wobei die Kugel (3) das Plättchen (2) im Schlitz (12) durch die Wirkung der Feder (4) festklemmt.

13. Optischer Multiplexer/Demultiplexer nach einem der Ansprüche 1 bis 12, dadurch gekennzeichnet, daß jede der Nuten ($R_A$, $R_B$, $R_C$) drei in Längsrichtung verlaufende Endstücke aufweist, um jeweils das Endstück einer Schutzhülle ($E_A$, $E_B$, $E_C$), eines Mantels ($G_A$, $G_B$, $G_C$) und eines Kerns ($C_A$, $C_B$, $C_C$) der jeweiligen optischen Faser ($F_A$, $F_B$, $F_C$) aufzunehmen.

14. Verfahren zur Herstellung eines optischen Multiplexer/Demultiplexers nach einem der Ansprüche 1 bis 13, dadurch gekennzeichnet, daß die Enden der optischen Fasern ($F_A$, $F_B$, $F_C$) mindestens in der Nähe des Schlitzes (12) des Stützteiles (1) abisoliert, abgeschnitten und in der Nähe des zweifarbigen Plättchens (2), nachdem sie in eine Flüssigkeit zur Anpassung des Indexes eingetaucht worden sind, jeweils in einer der Nuten ($R_A$, $R_B$, $R_C$) angeordnet und im Stützteil durch Klemmeinrichtungen (6, 7) festgehalten werden, die auf der Oberfläche (10) des Stützteiles und beidseits des Plättchens (2) angeordnet sind, wobei die Klemmeinrichtungen selbst auf der Oberfläche (10) des Stützteiles (1) festgehalten sind.

15. Verfahren nach Anspruch 14, dadurch gekennzeichnet, daß das Ende jeder Faser ($F_A$, $F_B$, $F_C$) durch Schneiden senkrecht zur Längsachse der Faser abgetrennt ist.

16. Verfahren nach Anspruch 14, oder 15, dadurch gekennzeichnet, daß die Flüssigkeit zur Anpassung der Indizes aus Klebstoff besteht.

FIG1

FIG 2

FIG 3

FIG 4